# EUROPEAN PATENT SPECIFICATION

(11) **EP 4 416 224 B1**
(45) Date of publication and mention of the grant of the patent: **22.07.2026**
(21) Application number: 22802072.3
(22) Date of filing: 10.10.2022
(51) Int. Cl.: C08L 71/02, C08F 20/00, C08L 81/02

(54) **FLAME RESISTANT HEAT-TRANSFER TUBE**
FLAMMFESTES WÄRMEÜBERTRAGUNGSROHR
TUBE DE TRANSFERT THERMIQUE RÉSISTANT AUX FLAMMES

(30) Priority: 11.10.2021 EP 21306421
(43) Date of publication of application: 21.08.2024
(73) Proprietor: Syensqo Specialty Polymers USA, LLC, Alpharetta, GA 30005-3914 (US)
(72) Inventor: SANSEAU, Olivier, 69002 Lyon (FR); SATTICH, William E, Cumming, GA 30040 (US); CALVARUSO, Gaetano, 21047 Saronno VA (IT)
(74) Representative: Ferri, Isabella
(86) International application number: PCT/EP2022/078147
(87) International publication number: WO 2023/061958

(56) References cited:
- EP-A1- 1 997 852
- EP-A1- 2 631 274
- WO-A1-2012/156327
- WO-A1-2016/102330
- DE-A1- 19 830 378
- JP-A- 2008 131 832
- US-A1- 2010 004 375
- US-A1- 2012 296 028
- US-A1- 2014 194 556

## Description

### Cross-Reference to Related Applications

This application claims priority to European patent application No. 21306421.5 filed on October 11, 2021.

### Technical Field

The invention generally relates to a thermal management system and more particularly it relates to a flame resistant heat transfer tube for use in a thermal management system, in particular in an electric vehicle.

### Background Art

Rechargeable batteries are known and are more and more widely used in a number of applications including for the propulsion of electric vehicles. Currently, most of the development in the field of rechargeable batteries, in all industry segments, is focused on lithium-ion based batteries which are based on different types of lithium salts. Naturally also new technologies, outside the realm of lithium-ion based batteries, are being explored and continuously developed.

In the field of electric mobility, batteries have to supply ever greater instantaneous powers and have a high storage capacity. Batteries having operating voltages of several hundred volts are nowadays known. To achieve the desired voltages and currents, it is conventional to connect a plurality of individual battery cells together in parallel and/or in series.

While advancements have been made in electric vehicle batteries that allow them to deliver more power and require less frequent charges, one of the biggest challenges for battery safety is the ability to design an effective cooling system.

Differently from conventional power systems, batteries, and in particular rechargeable batteries, have strict requirements for their working environment. Batteries tend to operate in the best conditions within a relatively narrow range of temperatures.

In general, low temperatures have an effect on the battery chemistry slowing down the reaction rate and therefore reducing the electricity flow when charging or discharging. High temperatures instead increase the reaction rate and at the same time also increase energy dissipation thus generating even more excess heat possibly causing an uncontrolled increase of temperature which can cause irreversible damage to the cell. For a typical Li-ion battery a temperature above 80°C, even only in a part of its structure, can start exothermal chemical reactions which cause a further temperature increase of the battery, ultimately leading to a complete collapse of the battery with risk of fire and explosion.

On the other hand, the practical applications of batteries require them to be efficient in a much broader range of temperatures. For example vehicles batteries need to function properly in any environment where people is expected to use them, so that they need to be operative in a temperature range from -20°C to +40°C and beyond. In addition to that, charge and discharge cycles of batteries can generate heat within the battery itself making it even more difficult to maintain the battery within an acceptable temperature range.

Indicative figures for a typical Li-ion battery suggest that the usable range is normally from -20°C to 60°C, but a good power output is only obtained from 0°C to 40°C, where optimal performance is only obtainable from 20° to 40°C. Temperature also affects battery duration, in fact the number of charge/discharge cycles a battery can withstand before being considered exhaust go down quickly below 10°C due to anode plating, and above 60°C due to the deterioration of the electrode materials. The temperature ranges for optimal performance may be different for different battery chemistries and constructions, however all current commercial batteries share a relatively narrow temperature window where their performance is optimal. It is also important in general to ensure that the entire battery is kept uniformly at the same temperature without hot or cold zones, as this can reduce its lifetime and safety.

For this reason it is nowadays standard to integrate a Battery Thermal management System (BTMS) within commercial battery assemblies, especially when safety, reliability and lifetime of the battery are a significant concern. These BTMSs can be more or less complex, depending on the type of battery, however one common element is the presence of a heat transfer fluid which exchanges heat with the battery thus heating or cooling it.

Several heat transfer systems exist for the thermal management of batteries, such as air cooling, liquid cooling, and direct refrigerant cooling. Among these, liquid cooling is the most commonly used system due to its convenient design and good heat transfer performance.

The use of water, or water/ethylene glycol mixtures, is widespread, since this type of heat transfer system is already common in vehicles with conventional drives, i.e. with internal combustion engines.

A safety-critical drawback of the use of this water based heat transfer medium is the electrical conductivity thereof. In the event of the heat transfer circuit leaking, for example as a result of an accident, the escaping water or water/ethylene glycol mixture can cause short circuits. As a result fires and other emergency situations can be caused, and this can in turn lead to additional and sometimes considerable damage to the vehicle. In order to reduce this risk, the components of the thermal management system should possess high flame retardant properties. One conventional manner to identify flame resistance in plastic materials refers to standard tests developed by Underwriters Laboratory (USA), referred to as UL 94, the Standard for Safety of Flammability of Plastic Materials for Parts in Devices and Appliances testing. Preferably components of the thermal management system for use in batteries in electric vehicles should comply with standard V0, which identifies plastic materials for which "burning stops within 10 seconds on a vertical part allowing for drops of plastic that are not inflames".
EP2631274 A1 discloses a method for producing thermoplastic resin composition with enhanced low-temperature toughness and high-temperature creep resistance, particularly suitable for fluid piping applications. The thermoplastic resin composition is a blend of polyphenylene sulfide (PPS) with either polyetherimide (PEI) or polyethersulfone (PES), optionally including a compatibilizer to enhance compatibility between the components.
EP1997852A1 discloses high-toughness, polyphenylene sulfide resin composition with finely dispersed polyetherimide or polyethersulfone and specific compatibilizers for improved processability and molded products. WO2016102330A1 discloses a high-flow, high-strength polymer composite made of PAEK, PPSU, PES, and reinforcing filler, offering improved mechanical properties and processability.
US2010004375A1 discloses a process for significantly improving the impact resistance of polyphenylene sulfide (PPS) by pre-compounding it with a functional polyolefin and an elastomer before blending. US2014194556A1 discloses compatibilized blends of polyphenylene sulfone (PPSU) and polyphenylene sulfide (PPS) using polyetherimide and epoxy additives to achieve superior mechanical, thermal, and processing properties.
WO2012156327A1 discloses a thermoplastic molding composition of polyarylene ethers and polyphenylene sulfide with improved processing stability.
DE19830378A1 discloses impact-resistant molding compounds based on polyarylene ether sulfones with hydroxy end groups and epoxy group-containing polyethylene rubbers.
US2012296028A1 discloses thermoplastic molding composition of polyarylene ethers and polyphenylene sulfide with improved processing stability.
JP2008131832A discloses blends of PPS resin, carbon fiber, PTFE and a specific epoxy compound, designed to provide high adhesion when used with an epoxy adhesive.

Therefore, there is a continued need in the art for a thermal management system for batteries, in particular batteries for use in electric vehicles, that will use optimized heat transfer tube having the highest flame retardant rating and, at the same time, the required mechanical properties to withstand solicitations during use of the vehicles. The need still exists for heat transfer tubes also having high chemical resistance with respect to the heat transfer fluids commonly used in thermal management systems, e.g. water/ethylene glycol mixtures.

### Summary of invention

It has now been found that certain compositions comprising at least one polyphenylsulfide, at least one polyphenylsulfone and a thermoplastic elastomer containing epoxy functional groups allow obtaining heat transfer tubes meeting the most stringent requirements for use in a battery thermal management system.

Hence, a first object of the invention is a heat transfer tube comprising a composition, said composition comprising:
- 45 to 75 wt% of at least one polyphenylsulfide (PPS);
- 20 to 45 wt% of at least one polyphenylsulfone (PPSU), and
- 5 to 15 wt% of at least one thermoplastic elastomer (TPE) containing epoxy functional groups,
said wt% being based on the total weight of the composition.

The inventive heat transfer tube has a V-0 rating as determined according to the UL 94 Standard for Safety of Flammability of Plastic Materials for Parts in Devices and Appliances, and are halogen-free. It hasve mechanical properties, such as tensile strength and tensile modulus, which comply with the needs of the application. Preferably in addition to having flame resistant V-0 rating, the tube exhibits deformation at break greater than 30 % (measured at room temperature (23°C) according to ISO 527-2).

Moreover, the inventive heat transfer tube is resistant to chemical ageing in water/ethylene glycol mixtures.

A second object of the invention is a thermal management system comprising the heat transfer tube of the first object, in particular a battery thermal management system.

A further object of the invention is a method of cooling a battery and/or operating a battery comprising passing a heat transfer fluid, preferably a water/ethylene glycol mixture, in a heat transfer tube according to the first object.

### Description of invention

A first object of the invention is a heat transfer tube comprising a composition, said composition comprising:
- 45 to 75 wt% of at least one polyphenylene sulfide polymer;
- 20 to 45 wt% of at least one polyphenylsulfone polymer, and
- 5 to 15 wt% of at least one thermoplastic elastomer containing epoxy functional groups,
said wt% being based on the total weight of the composition.

### The polyphenylene sulfide polymer (PPS)

The composition comprises at least one polyphenylene sulfide polymer, hereinafter referred to as "PPS".

In its broadest definition, the PPS can be made of substituted and/or unsubstituted phenylene sulfide groups.

According to the present invention, a PPS polymer denotes any polymer comprising at least 50 mol% of recurring units (R_{PPS}) of formula (A) (mol% being based on the total number of moles of recurring units in the PPS polymer): 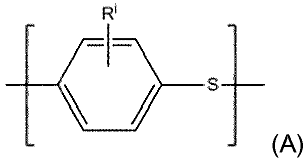 where R is independently selected from the group consisting of halogen, C1-C12 alkyl groups, C7-C24 alkylaryl groups, C7-C24 aralkyl groups, C6-C24 arylene groups, C1-C12 alkoxy groups, and C6-C18 aryloxy groups, and i is independently zero or an integer from 1 to 4.

According to formula (A), the aromatic ring of the recurring unit (R_{PPS}) may contain from 1 to 4 radical groups R. When i is zero, the corresponding aromatic ring does not contain any radical group R.

The PPS polymer is preferably any polymer comprising at least 50 mol% of recurring units (R_{PPS}) of formula (A'), that is recurring units of formula (A) where i is zero:

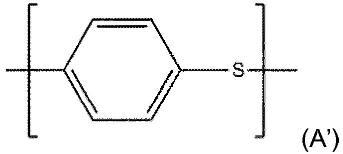

According to an embodiment of the present invention, the PPS polymer is such that at least 60 mol %, at least 70 mol %, at least 80 mol %, at least 90 mol %, at least 95 mol %, at least 99 mol % of the recurring units in the PPS are recurring units (R_{PPS}) of formula (A) or (A'). The mol% are based are based on the total number of moles of recurring units in the PPS polymer.

The PPS may be acid washed or not acid washed. In some embodiments, the PPS is acetic acid washed PPS.

According to an embodiment of the present invention, the PPS polymer is such that 100 mol % of the recurring units are recurring units (R_{PPS}) of formula (A) or (A'). According to this embodiment, the PPS polymer consists essentially of recurring units (R_{PPS}) of formula (A) or (A').

Suitable PPS is commercially available under the tradename Ryton^{®} PPS from Solvay Specialty Polymers USA, LLC. In the text of the application, a PPS product Ryton^{®} starting with the prefix 'QA' such as QA200N means an acid-washed PPS.

The melt flow rate (at 316°C under a weight of 5 kg according to ASTM D1238, procedure B) of the PPS may be from 50 to 400 g/10 min, for example from 60 to 300 g/10 min or from 70 to 200 g/10 min. For example, Ryton^{®} PPS QA 220N and QA 200N have a melt flow rate of 160 g/10 min, and 100 g/10 min, respectively. Ryton^{®} PPS QC 220N, QC 210N and QC 200N have a melt flow rate of 175 g/10 min, 135 g/10 min, and 100 g/10 min, respectively.

As used herein, the melt flow rate (MFR), also known as melt flow index (MFI), is used to characterize polymer melts. It is an indirect measure of molecular weight, meaning that high MFR corresponds to low molecular weight. At the same time, the melt flow rate is a measure of the ability of the material's melt to flow under pressure. The melt flow rate is inversely proportional to the viscosity of the polymer melt. If the MFI or MFR is low, then its melt viscosity and melt flow resistance is high.

The composition comprises at least one PPS in an amount of at least 45 wt%, at least 47 wt%, or at least 50 wt%, based on the total weight of the composition.

The composition comprises the at least one PPS in an amount of less than 75 wt%, less than 70 wt%, less than 65 wt%, or less than 60 wt%, based on the total weight of the composition.

Preferably, the composition comprises the at least one PPS in an amount ranging from 45 to 75 wt%, or from 50 to 65 wt%, based on the total weight of the composition.

### The polyphenylsulfone polymer (PPSU)

The composition comprises at least one polyphenylsulfone polymer, hereinafter referred to as "PPSU".

As used herein, PPSU denotes any polymer comprising at least 50 mol% of recurring units (R_{PPSU}) of formula (B), the mol% being based on the total number of moles of recurring units in the PPSU polymer:

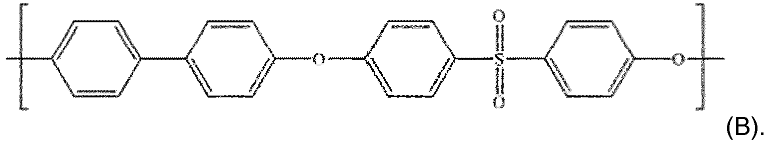

According to an embodiment of the present disclosure, at least 60 mol % (based on the total number of moles of recurring units in the PPSU polymer), at least 70 mol%, at least 80 mol%, at least 90 mol%, at least 95 mol%, or at least 99 mol% or all of the recurring units in the PPSU polymer are recurring units (R_{PPSU}) of formula (B).

PPSU can be prepared by known methods and is notably available as RADEL^{®} PPSU from Solvay Specialty Polymers USA, L.L.C. Suitable PPSU polymers may be selected, but not limited to, Radel^{®} R-5500 NT, R-5700 NT, R-5800 NT and R-5900 NT.

The melt flow rate (at 365°C under a weight of 5 kg according to ASTM D1238) of the PPSU may be from 5 to 40 g/10 min, for example from 5 to 35 g/10 min, from 10 to 40 g/10 min, from 10 to 30 g/10 min, from 12 to 40 g/10 min, from 20 to 40 g/10 min, or from 10 to 35 g/10 min. For example, Radel^{®} PPSU R-5500 NT, R-5700 NT, R-5800 NT and R-5900 NT have a melt flow rate of 12-17 g/10 min, 34-40 g/10 min, 20-28 g/10 min, and 26-36 g/10 min, respectively.

The composition comprises at least one PPSU in an amount of at least 22 wt%, for example at least 25 wt%, at least 27 wt%, or at least 29 wt%, based on the total weight of the composition.

The composition may comprise at least one PPSU in an amount of less than 43 wt%, for example less than 40 wt%, or less than 38 wt%, based on the total weight of the composition.

Preferably, the composition may comprise at least one PPSU in an amount ranging from 22 to 43 wt. %, for example from 25 to 40 wt. %, from 29 to 38 wt%, based on the total weight of the composition.

### The thermoplastic elastomer containing epoxy functional groups (TPE)

The composition comprises at least one thermoplastic elastomer containing epoxy functional groups, hereinafter referred to as "TPE".

In the context of the present invention, an "elastomer" is defined as a polymeric material presenting: (1) a low glass transition temperature (Tg), that is to say a glass transition temperature below 25°C, even below 0°C, and (2) a low modulus (Young's Modulus), that is to say a modulus below 200 MPa or even below 100 MPa.

The polymer backbone of the TPE can be selected from elastomeric backbones comprising polyethylenes and copolymers thereof, e.g. ethylene-butene; ethylene-octene; polypropylenes and copolymers thereof; polybutenes; polyisoprenes; ethylene-propylene-rubbers (EPR); ethylene-propylene-diene monomer rubbers (EPDM); ethylene-acrylate rubbers; butadiene-acrylonitrile rubbers, ethylene-acrylic acid (EAA), ethylene-vinylacetate (EVA); acrylonitrile-butadiene-styrene rubbers (ABS), block copolymers styrene ethylene butadiene styrene (SEBS); block copolymers styrene butadiene styrene (SBS); core shell elastomers of methacrylate-butadiene-styrene (MBS) type, or mixture of one or more of the above.

The TPE used in the composition comprises epoxy functional groups. The functionalization of the backbone can result from the copolymerization of monomers which include epoxy functional groups or from the grafting of the polymer backbone with a further component comprising epoxy functional groups.

Specific examples of TPEs are notably poly(ethylene-co-glycidylmethacrylate) copolymers, poly(ethylene-co-methyl (meth)acrylate-co-glycidyl acrylate) copolymers, poly(ethylene-co-n-butyl acrylate-co-glycidyl acrylate) copolymers as well as copolymers of styrene and glycidyl (meth)acrylates. Notable, non limiting, examples of commercially available TPEs suitable for the heat transfer tube of the invention, are for instance Lotader^{®} AX8900 and Lotader^{®} AX8840 from Arkema (Bristol, PA, USA) which are, respectively, a poly(ethylene-co-alkylacrylate-co-glycidyl acrylate) terpolymer (compirising structural units derived from 67 wt% ethylene, 25 wt% methylacrylate, and 8 wt% glycidyl methacrylate) and a poly(ethylene-co-glycidylmethacrylate) copolymer (comprising structural units derived from 92 wt% ethylene and 8 wt% glycidyl methacrylate) or Igetabond^{®} BF-E from Sumitomo Chemical also a poly(ethylene-co-glycidylmethacrylate) copolymer (comprising structural units derived from 88 wt% ethylene and 12 wt% glycidyl methacrylate). Another example of a suitable TPE is commercially available from Dow Inc. (Midland, MI, USA) under the trade name Paraloid^{™} EXL 2314, which is a core-shell type acrylate based polymer comprised of a core primarily comprised of crosslinked poly(n-butyl acrylate) rubber and of a shell comprised primarily of a poly(methyl methacrylate)-poly(glycidyl methacrylate) copolymer.

The composition preferably comprises a TPE which has a melt flow rate (ASTM D1238, 190°C with 2.16 kg load) of less than 10 g/10 min, for example less than 7 g/10 min, less than 6 g/10 min, less than 5 g/10 min, or less than 4 g/10 min.

The composition comprises at least one TPE in an amount of at least 6 wt%, or of at least 7 wt%, for example at least 8 wt%, based on the total weight of the composition.

The composition may comprise at least one TPE in an amount of less than 14 wt%, for example less than 12 wt%, based on the total weight of the composition.

Preferably, the composition may comprise at least one TPE in an amount ranging from 5 to 14 wt%, for example from 6 to 12 wt%, based on the total weight of the composition.

### Additives

In some embodiments, the composition can further include optional additives, including but not limited to, antioxidants (*e.g*., ultraviolet light stabilizers and heat stabilizers), processing aids, nucleating agents, lubricants, flame retardants, smoke-suppressing agents, anti-static agents, anti-blocking agents, colorants, pigments.

When present, additives are contained in the composition in an amount typically not exceeding 10 wt%, even not exceeding 8 wt% or not exceeding 5 wt% with respect to the total weight of the composition. Additives are generally present in an amount of at least 0.5 wt%, for example at least 0.8 wt% or at least 1 wt% with respect to the total weight of the composition.

In some embodiments, one or more pigments can be particularly desirable additives to provide a white, black or colored tube. The pigment may be a black pigment such as carbon black, a white pigment such as zinc oxide, zinc sulfide, lithopone, antimony white and titanium dioxide (of rutile or anatase type, preferably rutile type), and/or a colored pigment. A pigment is generally present in an amount of from 0 to 6 wt%, preferably from 0.05 to 5 wt% and in particular from 0.1 to 3 wt%, based on the total weight of the composition.

In some embodiments, antioxidants can be particularly desirable additives. Antioxidants can improve the heat and light stability of the composition. For example, antioxidants that are heat stabilizers can improve the thermal stability of the composition during manufacturing (or in high heat application settings), for example, by making the polymer processable at higher temperatures while helping to prevent polymer degradation.

Desirable antioxidants include, but are not limited to, copper salts (*e.g*., CuO and Cu₂O), alkaline metal halides (*e.g*., Cul, KI, and KBr, including combinations of alkaline metal halides such as, but not limited to, Cul/Kl), hindered phenols, hindered amine light stabilizers ("HALS") (*e.g*., tertiary amine light stabilizers) and organic or inorganic phosphorous-containing stabilizers (e*.g.* sodium hypophosphite or manganese hypophosphite).

In some embodiments, the additive is a halogen-free flame retardant. In some embodiments, the halogen free flame retardant is an organophosphorous compound selected from the group consisting of phosphinic salts (phosphinates), diphosphinic salts (diphosphinates) and condensation products thereof. In alternate embodiments, the composition does not contain a flame retardant.

The composition is preferably halogen-free, meaning that no halogen-containing components are used in the composition.

The composition may exclude another polymer distinct from the TPE, PPS and PPSU polymers.

The composition preferably excludes a poly(ether imide) ("PEI") polymer; the expressions "poly(ether imide)" and/or "polymer (PEI)" denote a polymer comprising at least 50 mol.%, based on the total number of moles in the polymer, of recurring units (R_{PEI}) comprising at least one aromatic ring, at least one imide group, as such and/or in its amic acid form, and at least one ether group. Recurring units (R_{PEI}) may optionally further comprise at least one amide group which is not included in the amic acid form of an imide group.

The heat transfer tube of the invention comprises the composition as above detailed. The heat transfer tube typically consists of the composition as above detailed.

Advantageously, the heat transfer tube of the invention has a V-0 rating as determined according to the UL 94 Standard (Standard for Safety of Flammability of Plastic Materials for Parts in Devices and Appliances of the Underwriters Laboratory (USA)).

The heat transfer tube may be manufactured using any suitable method known in the art. The heat transfer tube is typically manufactured by extrusion. Suitably the entire length of tube is extrudable and/or extruded in a single extrusion process.

The inventive heat transfer tube suitably has a substantially constant cross-section along its entire extent. Said tube preferably has a circular cross-section. The tube is hollow to allow the flow of the heat transfer fluid.

The heat transfer tube of the invention which is hollow has an inner surface layer in direct contact with the heat transfer fluid. This inner surface layer is preferably made from the composition as above detailed. Preferably, the entire hollow heat transfer tube of the invention is made from the composition as above detailed.

The dimensions of the heat transfer tube are not limited and they are set by the dimensions of the thermal management system in which the tube is employed. In some embodiments the heat transfer tube may have a diameter in the range of 5 to 50 mm, even 5 to 30 mm. Wall thickness for the tube may typically be in the range of 0.5 to 5.0 mm, of 0.8 to 5.0 mm, or even 1.0 to 5.0 mm.

A second object of the invention is a thermal management system comprising the heat transfer tube which is the first object of the invention. The thermal management system additionally comprises a heat transfer fluid. The heat transfer fluid is contained in the heat transfer tube. The heat transfer fluid preferably passes (flows) inside the heat transfer tube. The heat transfer fluid may be selected from the group consisting of water, water/ethylene glycol mixtures, chlorofluorocarbons (CFCs), hydrochlorofluorocarbons (HFCs) and (per)fluorinated polyethers (PFPEs). In a preferred embodiment of the invention, the heat transfer fluid is selected from the group consisting of water or water/ethylene glycol mixtures. In certain embodiments, the heat transfer fluid may be selected from the group consisting of chlorofluorocarbons (CFCs), hydrochlorofluorocarbons (HFCs) and (per)fluorinated polyethers (PFPEs). The thermal management system of claim 8 further comprising a heat transfer fluid contained in the heat transfer tube

In an embodiment of the invention, the thermal management system is a battery thermal management system, hereinafter "BTMS", that is a thermal management system for the control of the temperature in a battery system, preferably in a rechargeable battery system.

The BTMS can be more or less complex, depending on the application, but the BTMS has at least a function to cool the battery when its temperature is too high and a function to heat the battery when its temperature is too low, typically using a heat transfer fluid flowing within the inventive cooling tube which exchanges heat with the battery. Other common features in BTMSs are an insulation system, to reduce the effect of the external environment on the battery temperature, and a ventilation system which helps dissipating hazardous gases which may develop within the battery pack.

Typically the heat transfer fluid is circulated by a pump within a closed system comprising the inventive heat transfer tube which is in thermal contact with the battery and with a second system which has the function of heating and/or cooling the heat transfer fluid to the desired temperature. This second system may comprise any combination of a refrigeration system and a heating system or may combine heating and cooling functions in a heat pump. The circulating heat transfer fluid absorbs heat from or releases heat to the battery and then it is circulated in said second system to bring the heat transfer fluid back to the desired temperature. A more or less sophisticated control system may be present controlling the instant temperature of the heat transfer fluid and the temperature of the battery optimizing the temperature of the heat transfer fluid in each moment.

A further object of the invention is thus a method of controlling the temperature in a battery said method comprising the step of circulating a heat transfer fluid within a closed system comprising the inventive heat transfer tube wherein said system is in thermal contact with the battery and with a second system which has the function of heating and/or cooling the fluid to the desired temperature.

An additional object of the invention is a method for operating a battery comprising the step of controlling the temperature of the battery as defined above.

The battery comprising the BTMS as detailed above can be used in all applications where rechargeable batteries may be used. Notable, non limiting examples of such applications are for instance urban mobility vehicles, such as cars, ebikes, buses and the like.

### EXAMPLES

### Raw Materials

PPS polymer (PPS): Ryton^{®} QA200N obtained from Solvay Specialty Polymers USA, L.L.C; an acid-washed PPS, having a melt flow rate of 100 g/10 min with 5 kg load at a temperature of 316 °C (ASTM D1238).

PPSU-1 polymer: Radel^{®} R-5500NT obtained from Solvay Specialty Polymers USA, L.L.C., having a melt flow rate of 12-17 g/10 min with 5 kg load at a temperature of 365 ∘C (ASTM D1238).

PPSU-2 polymer: Radel^{®} R-5800NT obtained from Solvay Specialty Polymers USA, L.L.C., having a melt flow rate of 20-28 g/10 min with 5 kg load at a temperature of 365 °C (ASTM D1238).

PPSU-3 polymer: Radel^{®} R-5900NT obtained from Solvay Specialty Polymers USA, L.L.C., having a melt flow rate of 26-36 g/10 min with 5 kg load at a temperature of 365 °C (ASTM D1238).

PPSU-4 polymer: Radel^{®} R-5600NT obtained from Solvay Specialty Polymers USA, L.L.C. , having a melt flow rate of 34-40 g/10 min with 5 kg load at a temperature of 365 ∘C (ASTM D1238).

TPE-1: Lotader^{®} AX8900 from Arkema, Bristol USA, having a melt flow index of 6 g/10 min at 190°C with 2.16 kg load (ASTM D1238)

TPE-2: Igetabond^{®} BF-E from Sumitomo Chemical, having a melt flow rate of 3 g/10 min (JIS K7210-1, 190°C, 21.2N) and a Tg of -26°C

AO: Irgafos^{®} 168 by BASF which is tris(2,4-di-tert.-butylphenyl)phosphite was used as an antioxidant

Carbon black concentrate ('CBC'): 30 wt% of Arosperse 11W carbon black (Orion Engineered Carbons GmbH, Germany) in Ryton^{®} PPS QA200N (Solvay Specialty Polymers USA, L.L.C.).

### General procedure for the preparation of compositions

The PPSU polymer was first dried at 135°C in an oven at least for 5 hours. A dry blend was then realized by mixing the polymers in a vibratory shaker for 2-3 minutes to ensure homogeneity. The dry blend was then placed in a gravimetric feeder and fed into a twin screw extruder (Clextral D32), melted, and extruded. Temperature during extrusion was controlled around 320°C for the reference compositions and 340°C - 350°C for compositions according to the invention.

The melt stream was cooled and fed into a pelletizer. The pellets were collected and kept in sealed plastic buckets until used for injection molding. **TESTING**

**The following test methods were employed in evaluating the compositions:**
Tensile properties - ISO 527 type 1A bars and thin-small parts (1.6 mm) were fabricated by injection molding on a Billion Injection (at 300-320°C for Reference Composition 1 and 2 and 340°C for Examples 1-4). Tensile properties were determined at room temperature (23°C) according to ISO 527-2 at a speed of 1 mm/min for tensile Modulus and 5mm/min for the ultimate properties (stress and deformation at break).

Weldline strength measurement was performed using ISO 527.

ISO 178 was used to determine flexural properties.

Charpy impact properties were measured according to ISO 179-1/1eU (unnotched) and ISO 179-1/1eA (notched) at 23°C.

D3835: Melt viscosity evaluation was performed on the extruded pellets via capillary rheometry using a Netzsch RH2000 capillary rheometer at 60s⁻¹ at 316°C (Reference compositions 1 and 2) and 340°C (Example 1)

UL94 : Flame resistance was evaluate according to standard UL 94 of Underwriters Laboratory (USA) on 1.6 mm thick samples.

Several compositions are as detailed in Table 1 where all percentages are by weight, calculated with respect to the total weight of the composition.

**Table 1**

| | Reference composition 1 | Reference composition 2 | Example 1 |
|---|---|---|---|
| PPS | 90% | 90% | 57% |
| PPSU-1 | - | - | 33% |
| TPE-1 | 10% | - | |
| TPE-2 | - | 10% | 10% |

Results are summarized in Table 2 below.

**Table 2**

| | Reference Composition 1 | Reference Composition 2 | Example 1 |
|---|---|---|---|
| UL94 Screen Flame Class | Fail | - | V0 |
| Deformation at break* (%) | 13 | 25 | >30 |
| Melt viscosity at 60s⁻¹ (Pat v | 800 (at 316°C) | - | 1280 (at 340°C) |
| | | | 1876 (at 316°C) |

With respect to the reference compositions comprising PPS and TPE, the inventive composition, comprising PPSU-1, unexpectedly led to a material which met the V0 rating according to UL94 flammability standard. In addition to the improved flame resistance, the composition exhibited improved deformation at break (by more than 30%).

### Tube extrusion trial

Tubes were prepared using the composition of Example 1 in Table 1 as follows: the material was dried for 4h at 90°C before charging it in to an extruder. The barrel extruder temperature was set between 330-350°C.

Tubes were extruded using a calibration bath. The resulting tubes had good surface appearance and regular shape. The tubes had an 16-mm outer diameter, a wall thickness of 1.5 mm and an overall length of 10 cm.

A simple free-falling dart test was performed on 10 tubes made from the same composition of Example 1 to determine the impact resistance. This fall dart test was carried out at a temperature of -40°C using a 880-g dart at a single drop height of 65 cm. None of the tubes broke.

### Impact of PPS selection

Additional formulations of the invention were made in Examples 2-4 according to the general procedure as detailed above using different PPSU Radel^{®} products; and their respective compositions are provided in Table 3 (with Example 1 being again reproduced for comparison), where all percentages are by weight based on the total weight of each composition.

**Table 3**

| | Example 1 | Example 2 | Example 3 | Example 4 |
|---|---|---|---|---|
| PPS | 57% | 57% | 57% | 57% |
| PPSU-1 | 33% | - | - | - |
| PPSU-2 | | 33% | | |
| PPSU-3 | | | 33% | |
| PPSU-4 | - | - | - | 33% |
| TPE-2 | 10% | 10% | 10% | 10% |

Tensile and impact properties for Examples 1-4 are summarized in Table 4.

**Table 4**

| | Example 1 | Example 2 | Example 3 | Example 4 |
|---|---|---|---|---|
| Tensile modulus (MPa) | 2446 | 2418 | 2427 | 2422 |
| Tensile strength (MPa) | 61.8 | 61.4 | 61.4 | 61.7 |
| Tensile strength at break (MPa) | 52.6 | 52.6 | 52.32 | 52.8 |
| Deformation at break (%) | 30.4 | 45.0 | 36.7 | 40.1 |
| Charpy notched impact (kJ/m² ) | 62.7 | 63.0 | 59.2 | 63.3 |

All of the Examples 1-4 provided suitable and similar tensile modulus, tensile strength, tensile strength at break and impact property, regardless of the PPSU polymer used in the 4 formulations.

All Examples 1-4 had a deformation at break > 30%. It was observed though that, with the PPS and TPE being the same in the compositions of Examples 1-4, the deformation at break was improved when using PPSU-2, PPSU-3 and PPSU-4 which overall had a MFR ranging from 20 to 40 g/10 min (ASTM D1238 with 5 kg load at a temperature of 365 °C) compared to when using PPSU-1 which had a MFR of 12 to 17 g/10 min (ASTM D1238 with 5 kg load at a temperature of 365 °C). Without wishing to be limited by theory, it is believed that a less viscous PPSU (having a MFR of 20 to 40 g/10 min (ASTM D1238 with 5 kg load at a temperature of 365 °C) provided a composition with an improved deformation at break.

### Impact of TPE selection

Additional formulations of the invention were made in Examples 5-6 according to the general procedure as detailed above using two different TPEs; and their respective compositions are provided in Table 5 where all percentages are by weight based on the total weight of each composition.

**Table 5**

| | Example 5 | Example 6 |
|---|---|---|
| PPS | 53.6% | 53.6% |
| PPSU-2 | 33% | 33% |
| TPE-1 | 10% | - |
| TPE-2 | - | 10% |
| AO | 0.4% | 0.4% |
| CBC* | 3% | 3 |

| | | |
|---|---|---|
| * with 30 wt% of carbon black and 70 wt% PPS in the CBC, 3 wt% CBC in the formulations of Examples 5 & 6 represented 0.9 wt% carbon black and 2.1 wt% PPS, such that the combined wt% of PPS in the formulations of Examples 5 and 6 was 55.7 wt%. | | |

Tensile and impact properties for Examples 5 & 6 are summarized in Table 6.

**Table 6**

| | Example 5 | Example 6 |
|---|---|---|
| Tensile modulus (MPa) | 2275 | 2363 |
| Tensile strength (MPa) | 58.5 | 62.6 |
| Tensile strength at break (MPa) | 52.3 | 54.4 |
| Deformation (tensile strain) at break (%) | 35.4 | 70.3 |
| Charpy notched impact (kJ/m² ) | 11.3 | 11.3 |

While both Examples 5 and 6 provided suitable and similar tensile properties regardless of the TPE used in the formulations, the formulation of Example 6 with TPE-2: Igetabond^{®} FB-E resulted in a material having much better deformation at break, in fact having a value (70%) twice as much as the value (35%) obtained with the comparable formulation of Example 5 which contained TPE-1: Lotader^{®} AX8900. Without wishing to be limited by theory, it is believed that the more viscous TPE (Igetabond^{®} FB-E having indeed a lower MFR than Lotader^{®} AX8900) resulted in an improvement in the deformation at break.

### Impact of PPSU content

Additional formulations according to the invention were made in Examples 7-10 according to the general procedure as detailed above using PPSU-1 (Radel^{®} R-5500 NT) varying its content in the compositions from 20 to 33 wt %; and their respective compositions are provided in Table 7, where all percentages are by weight based on the total weight of each composition.

**Table 7**

| | Example 7 | Example 8 | Example 9 | Example 10 |
|---|---|---|---|---|
| PPS | 70% | 65% | 60% | 57% |
| PPSU-1 | 20% | 25% | 30% | 33% |
| TPE-2 | 10% | 10% | 10% | 10% |

Tensile and impact properties for Examples 7-10 are summarized in Table 8.

**Table 8**

| | Example 7 | Example 8 | Example 9 | Example 10 |
|---|---|---|---|---|
| Tensile modulus (MPa) | 2529 | 2473 | 2468 | 2426 |
| Tensile strength (MPa) | 59.5 | 59.9 | 60.4 | 61.9 |
| Tensile strength at break (MPa) | 51.0 | 51.8 | 52.1 | 53.0 |
| Deformation at break (%) | 31.0 | 39.2 | 30.2 | 34.3 |
| Charpy notched impact (kJ/m² ) | 17.7 | 21.8 | 53.3 | 62.4 |

All of the Examples 7-10 provided suitable and similar tensile modulus, tensile strength, tensile strength at break, and deformation at break > 30%, regardless of the PPSU-1 content used in the 4 formulations.

However it was observed that an increase in PPSU content from 20 to 33 wt % resulted in an increase in the impact property, the resulting materials in Examples 9 and 10 having an improved impact resistance compared to Examples 7 and 8.

The materials of Examples 9 and 10 were confirmed to meet the V0 rating according to UL94 flammability standard.

### Chemical ageing

The formulation of Example 1 was used to make a polymeric specimen by injection molding according to ISO 527-2 Type 1A. This specimen was subjected to chemical ageing in an autoclave at 135°C by direct contact with a 50:50 (v/v) blend of ethylene glycol (Frostox^{®} HT 12 from Haertol) and water for up to 1000 hours.

The tensile and flexural properties of the polymeric specimen were measured before exposure (t=0 hr) and after 500 and 1000 hours of exposure to the ethylene glycol/water blend, and then compared with the initial values.

The results are provided in Table 9, in which the % for the tensile and flexural modulus and strength represents the percent change (negative for a decrease or positive for an increase) of a value Vₜ at time 't' (t= 500 or 1000 h) compared to the initial value: Vᵢ at t=0 h according to the following equation: % change = 100 * (Vt - Vᵢ) / Vᵢ.

**Table 9**

| | Initial - 0 h | After 500 h | After 1000 h |
|---|---|---|---|
| Tensile modulus (MPa) | 2540 | -5% | -1% |
| Tensile strength (MPa) | 54 | +3% | +3% |
| Weld line strength (MPa) | 55 | 49.1 | 48.8 |
| Weight change (%) | - | 0.9% | 1% |
| Flexural modulus (MPa) | 2300 | 0% | 0% |
| Flexural strength (MPa) | 97 | +10% | +12% |
| Weld line strength (MPa) | 76 | 48 | 51 |

This testing demonstrated the high chemical resistance of the composition of Example 1 to be used in the tube according to the invention..

## Claims

1. A heat transfer tube comprising a composition comprising:
- 45 to 75 wt% of at least one polyphenylene sulfide polymer;
- 20 to 45 wt% of at least one polyphenylsulfone polymer, and
- 5 to 15 wt% of at least one thermoplastic elastomer containing epoxy functional groups,
said wt% being based on the total weight of the composition.

2. The heat transfer tube of claim 1 which has a V-0 rating as determined according to UL 94 Standard (Standard for Safety of Flammability of Plastic Materials for Parts in Devices and Appliances of the Underwriters Laboratory (USA)).

3. The heat transfer tube of claim 1 or 2, wherein the polyphenylsulfone polymer comprises at least 50 mol% of recurring units (R_{PPSU}) of formula (B), the mol% being based on the total number of moles of recurring units in the polyphenylsulfone polymer:

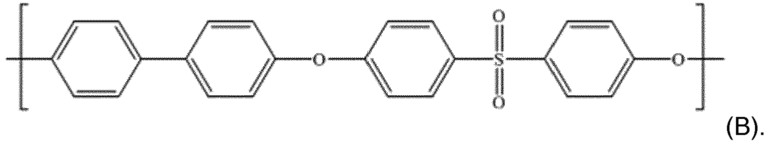

4. The heat transfer tube of any one of claims 1 to 3 wherein the thermoplastic elastomer in the composition is selected from the group consisting of poly(ethylene-co-glycidylmethacrylate) copolymers, poly(ethylene-co-methyl (meth)acrylate-co-glycidyl acrylate) copolymers, poly(ethylene-co-n-butyl acrylate-co-glycidyl acrylate) copolymers and copolymers of styrene and glycidyl (meth)acrylates.

5. The heat transfer tube of any one of claims 1 to 4, having a substantially constant cross-section along its entire length, preferably a circular cross-section.

6. The heat transfer tube of any one of claims 1 to 5, being hollow to allow flow of a heat transfer fluid therethrough.

7. The heat transfer tube of any of claims 1 to 6, having a diameter in the range of 5 to 50 mm and a wall thickness in the range of 0.5 to 5.0 mm.

8. A thermal management system comprising the heat transfer tube of any one of claims 1 to 7.

9. The thermal management system of claim 8 further comprising a heat transfer fluid contained in the heat transfer tube.

10. The thermal management system of any one of claim 8 or 9 wherein the heat transfer fluid is selected from the group consisting of water, water/ethylene glycol mixtures, chlorofluorocarbons (CFCs), hydrochlorofluorocarbons (HFCs) and (per)fluorinated polyethers (PFPEs).

11. An apparatus comprising the thermal management system of any one of claims 8 to 10, **characterised in that** the heat transfer fluid in said thermal management system exchanges heat with the apparatus.

12. The apparatus of claim 11 which is a battery, preferably a rechargeable battery.

13. A device comprising the battery of claim 12, which is an electric vehicle.

14. A method for controlling the temperature in a battery, said method comprising a step of circulating a heat transfer fluid within a closed system comprising the heat transfer tube of any one of claims 1 to 7, wherein said system is in thermal contact with the battery and with a second system which has the function of heating and/or cooling the fluid to the desired temperature.

15. A method for operating a battery comprising the method of controlling the temperature in the battery of claim 14.

## Patentansprüche

1. Wärmeübertragungsrohr, umfassend eine Zusammensetzung, umfassend:
- 45 bis 75 Gew.-% mindestens eines Polyphenylensulfid-Polymers;
- 20 bis 45 Gew.-% mindestens eines Polyphenylsulfon-Polymers, und
- 5 bis 15 Gew.-% mindestens eines thermoplastischen Elastomers, das funktionelle Epoxidgruppen enthält,
wobei sich die Gew.-% auf das Gesamtgewicht der Zusammensetzung beziehen.

2. Wärmeübertragungsrohr nach Anspruch 1, das eine V-0-Einstufung gemäß dem Standard UL 94 (Standard for Safety of Flammability of Plastic Materials for Parts in Devices and Appliances of the Underwriters Laboratory (USA)) aufweist.

3. Wärmeübertragungsrohr nach Anspruch 1 oder 2, wobei das Polyphenylsulfon-Polymer mindestens 50 mol% sich wiederholende Einheiten (R_{PPSU}) der Formel (B) umfasst, wobei sich die mol% auf die Gesamtzahl der Mole sich wiederholender Einheiten in dem Polyphenylsulfon-Polymer beziehen:

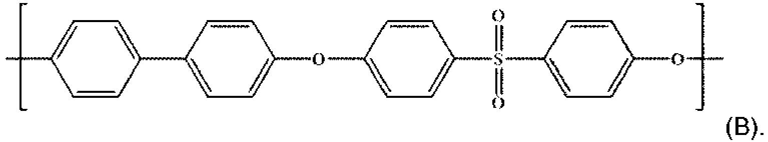

4. Wärmeübertragungsrohr nach einem der Ansprüche 1 bis 3, wobei das thermoplastische Elastomer in der Zusammensetzung ausgewählt ist aus der Gruppe bestehend aus Poly(ethylen-co-glycidylmethacrylat)-Copolymeren, Poly(ethylen-co-methyl(meth)acrylat-co-glycidylacrylat)-Copolymeren, Poly(ethylen-co-n-butylacrylat-co-glycidylacrylat)-Copolymeren und Copolymeren von Styrol und Glycidyl(meth)acrylaten.

5. Wärmeübertragungsrohr nach einem der Ansprüche 1 bis 4, das einen im Wesentlichen konstanten Querschnitt über seine gesamte Länge, vorzugsweise einen kreisförmigen Querschnitt aufweist.

6. Wärmeübertragungsrohr nach einem der Ansprüche 1 bis 5, das hohl ist, um Fließen eines Wärmeübertragungsfluids dort hindurch zu ermöglichen.

7. Wärmeübertragungsrohr nach einem der Ansprüche 1 bis 6, das einen Durchmesser im Bereich von 5 bis 50 mm und eine Wandstärke im Bereich von 0,5 bis 5,0 mm aufweist.

8. Wärmemanagementsystem, umfassend das Wärmeübertragungsrohr nach einem der Ansprüche 1 bis 7.

9. Wärmemanagementsystem nach Anspruch 8, ferner umfassend ein Wärmeübertragungsfluid, das in dem Wärmeübertragungsrohr enthalten ist.

10. Wärmemanagementsystem nach einem der Ansprüche 8 oder 9, wobei das Wärmeübertragungsfluid ausgewählt ist aus der Gruppe bestehend aus Wasser, Wasser/Ethylenglykol-Mischungen, Fluorchlorkohlenwasserstoffen (FCKW), teilhalogenierten Fluorchlorkohlenwasserstoffen (H-FCKW) und (per)fluorierten Polyethern (PFPE).

11. Apparatur, umfassend das Wärmemanagementsystem nach einem der Ansprüche 8 bis 10, **dadurch gekennzeichnet, dass** das Wärmeübertragungsfluid in dem Wärmemanagementsystem Wärme mit der Apparatur austauscht.

12. Apparatur nach Anspruch 11, die eine Batterie ist, vorzugsweise eine wiederaufladbare Batterie.

13. Vorrichtung, umfassend die Batterie nach Anspruch 12, die ein Elektrofahrzeug ist.

14. Verfahren zum Steuern der Temperatur in einer Batterie, wobei das Verfahren einen Schritt des Zirkulierens eines Wärmeübertragungsfluids innerhalb eines geschlossenen Systems umfasst, welches das Wärmeübertragungsrohr nach einem der Ansprüche 1 bis 7 umfasst, wobei das System in thermischem Kontakt mit der Batterie und mit einem zweiten System ist, welches die Funktion hat, das Fluid auf die gewünschte Temperatur zu erwärmen und/oder zu kühlen.

15. Verfahren zum Betrieb einer Batterie, umfassend das Verfahren zum Steuern der Temperatur in der Batterie nach Anspruch 14.

## Revendications

1. Tube de transfert de chaleur comprenant une composition comprenant :
- 45 à 75 % en poids d'au moins un polymère de poly(sulfure de phénylène) ;
- 20 à 45 % en poids d'au moins un polymère polyphénylsulfone, et
- 5 à 15 % en poids d'au moins un élastomère thermoplastique contenant des groupes fonctionnels époxy,
lesdits % en poids étant basés sur le poids total de la composition.

2. Tube de transfert de chaleur selon la revendication 1, qui a un score V-0 tel que déterminé selon la norme UL 94 (norme de sécurité relative à l'inflammabilité des matériaux plastiques pour les pièces de dispositifs et d'appareils d'Underwriters Laboratory (États-Unis)).

3. Tube de transfert de chaleur selon la revendication 1 ou 2, dans lequel le polymère de polyphénylsulfone comprend au moins 50 % en moles d'unités récurrentes (R_{PPSU}) de la formule (B), les % en moles étant basés sur le nombre total de moles d'unités récurrentes dans le polymère de polyphénylsulfone :

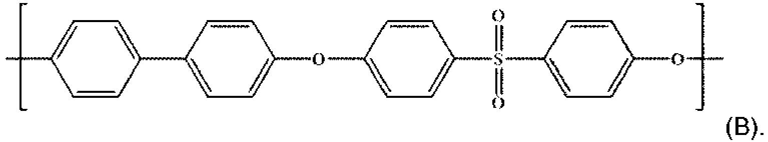

4. Tube de transfert de chaleur selon l'une quelconque des revendications 1 à 3, dans lequel l'élastomère thermoplastique dans la composition est choisi dans le groupe constitué des copolymères de poly(éthylène-co-méthacrylate de glycidyle), des copolymères de poly(éthylène-co-(méth)acrylate de méthyle-co-acrylate de glycidyle), des copolymères de poly(éthylène-co-acrylate de n-butyle-co-acrylate de glycidyle) et des copolymères de styrène et de (méth)acrylates de glycidyle.

5. Tube de transfert de chaleur selon l'une quelconque des revendications 1 à 4, ayant une section transversale sensiblement constante sur toute sa longueur, de préférence une section transversale circulaire.

6. Tube de transfert de chaleur selon l'une quelconque des revendications 1 à 5, qui est creux pour permettre l'écoulement d'un fluide de transfert de chaleur à travers celui-ci.

7. Tube de transfert de chaleur selon l'une quelconque des revendications 1 à 6, ayant un diamètre compris entre 5 et 50 mm et une épaisseur de paroi comprise entre 0,5 et 5,0 mm.

8. Système de gestion thermique comprenant le tube de transfert de chaleur selon l'une quelconque des revendications 1 à 7.

9. Système de gestion thermique selon la revendication 8, comprenant en outre un fluide de transfert de chaleur contenu dans le tube de transfert de chaleur.

10. Système de gestion thermique selon l'une quelconque des revendications 8 ou 9, dans lequel le fluide de transfert de chaleur est choisi dans le groupe constitué de l'eau, des mélanges eau/éthylène glycol, des chlorofluorocarbures (CFC), des hydrochlorofluorocarbures (HFC) et des polyéthers (per)fluorés (PFPE).

11. Appareil comprenant le système de gestion thermique selon l'une quelconque des revendications 8 à 10, **caractérisé en ce que** le fluide de transfert de chaleur dans ledit système de gestion thermique échange de la chaleur avec l'appareil.

12. Appareil selon la revendication 11, qui est une batterie, de préférence une batterie rechargeable.

13. Dispositif comprenant la batterie selon la revendication 12, qui est un véhicule électrique.

14. Procédé pour réguler la température dans une batterie, ledit procédé comprenant une étape de circulation d'un fluide de transfert de chaleur dans un système fermé comprenant le tube de transfert de chaleur selon l'une quelconque des revendications 1 à 7, dans lequel ledit système est en contact thermique avec la batterie et avec un second système qui a pour fonction de chauffer et/ou de refroidir le fluide jusqu'à la température souhaitée.

15. Procédé pour exploiter une batterie comprenant le procédé de régulation de la température dans la batterie selon la revendication 14.
